# EUROPEAN PATENT SPECIFICATION

(11) **EP 2 222 138 B1**
(45) Date of publication and mention of the grant of the patent: **29.06.2016**
(21) Application number: 09013463.6
(22) Date of filing: 26.10.2009
(51) Int. Cl.: H05B 41/288

(54) **Discharge lamp lighting device and illumination fixture**
Beleuchtungsvorrichtung für eine Entladelampe und Beleuchtungsbefestigung
Dispositif d'éclairage par lampe à décharge et accessoire d'illumination

(30) Priority: 28.10.2008 JP 2008277424
(43) Date of publication of application: 25.08.2010
(73) Proprietor: Panasonic Intellectual Property Management Co., Ltd., Osaka 540-6207 (JP)
(72) Inventor: Naoki, Komatu, Hyogo 657-0855 (JP); Daisuke, Yamahara, Osaka 575-0003 (JP)
(74) Representative: Rüger, Barthelt & Abel

(56) References cited:
- JP-A- H 076 889
- JP-A- 2007 005 260
- US-A1- 2008 180 037

## Description

### [Field of the Invention]

The present invention relates to a discharge lamp lighting device and an illumination fixture.

### [Background Art]

A discharge lamp lighting device including a power converting part for receiving an input of DC power and outputting AC power and a control part for controlling the power converting part has been conventionally provided as a discharge lamp lighting device for lighting a hot-cathode type discharge lamp such as a high-pressure discharge lamp also referred to as an HID (High-intensity discharge lamp).

As a discharge lamp lighting device of this type, there is provided a discharge lamp lighting device in which, the control part performs an electrode heating operation of making an output frequency of the power converting part relatively higher to heat each electrode of the discharge lamp at start of the discharge lamp, after a starting operation of making an output voltage of the power converting part relatively higher and before the start of a steady operation of outputting AC power for maintaining lighting of the discharge lamp from the power converting part to the discharge lamp (for example, refer to PCT No. 2005-507553).

The above-mentioned discharge lamp lighting device can stabilize discharge after a shift to the steady operation and suppress fade-out as compared to the case where the electrode heating operation is not performed.

JP 2007 005260 A shows a discharge lamp lighting device having a starting part and a power coversion part with a full-bridge circuit. A determination circuit determines whether a half- or full-wave discharge is carried out. A control circuit shifts to steady operation when the full-wave discharge is determined.

The discharge lamp lighting device according to JP H07 6889 A includes a chopper circuit, an inverter circuit and a load circuit with the discharge lamp. The inverter circuit is operated before the chopper circuit is operated. A starting part for starting the discharge lamp can impress pulse-like voltage asymmetric between the positive and the negative.

### [Disclosure of the Invention]

### [Problems to be solved by the Invention]

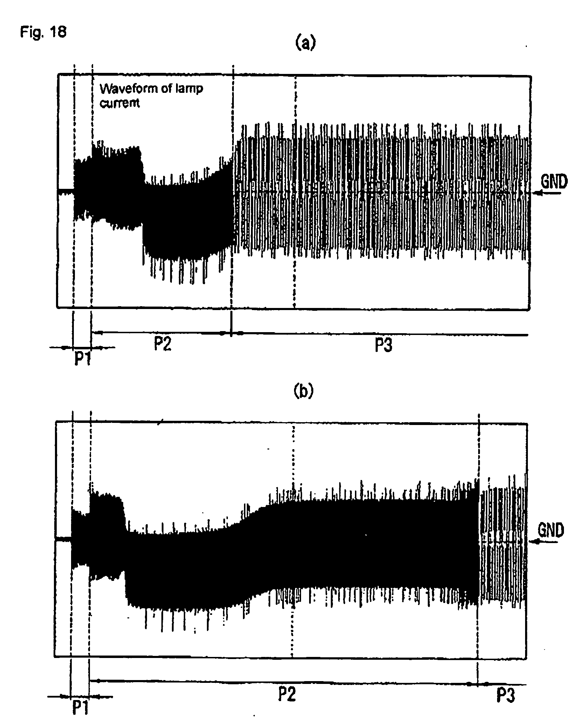

When an electrode heating period P2 during which an electrode heating operation is performed after a starting period P1 during which a starting operation is performed is short as shown in Fig. 18 (a), an electrode of the discharge lamp is not sufficiently heated before the start of a steady period P3 during which a steady operation is performed, resulting in that a current outputted to the discharge lamp (hereinafter referred to as "lamp current") becomes nonuniform between polarities. When the electrode heating operation shifts to the steady operation in the state where the electrode of the discharge lamp is not sufficiently heated as described above, discharge becomes unstable after a shift to the steady operation, thereby possibly causing fade-out. Accordingly, it is needed to set the electrode heating period P2 to be sufficiently long as shown in Fig. 18 (b). However, a necessary length of the electrode heating period P2 (duration time of the electrode heating operation) varies for each discharge lamp.

However, when the duration time of the electrode heating operation is determined to correspond to the discharge lamp requiring the electrode heating operation for a longest time among discharge lamps to be connected, the duration time is excessive for the other discharge lamps. Since the electrode heating operation allows the power converting part to output larger power than the steady operation, in order to suppress a negative effect on the life of the discharge lamp, the duration time of the electrode heating operation needs to be reduced as much as possible.

The present invention was made in consideration of the above matters, and an object thereof is to provide a discharge lamp lighting device and an illumination fixture which can set the duration time of the electrode heating operation to a suitable length for each discharge lamp.

### [Means to Solve the Problems]

According to a first aspect of the present invention, a discharge lamp lighting device includes a power converting part for receiving an input of DC power and outputting AC power, a starting part connected between output terminals of the power converting part together with a discharge lamp, and generating a high voltage for starting the discharge lamp, and a control part for controlling the power converting part, wherein at the start of the discharge lamp, after a starting operation of allowing the discharge lamp to start with a high voltage generated by the starting part and before the start of a steady a operation of allowing the power converting part to output AC power for maintaining lighting of the discharge lamp to the discharge lamp, the control part performs an electrode heating operation of making an output frequency of the power converting part higher than that in the steady operation to heat each electrode of the discharge lamp, the discharge lamp lighting device further includes a symmetry determining part for determining whether or not output power outputted to the discharge lamp is in a positive-negative symmetrical state, and when the symmetry determining part determines that the output power is in the positive-negative symmetrical state in the electrode heating operation, the control part shifts the electrode heating operation to the steady operation.

According to the invention, as compared to the case where the duration time of the electrode heating operation is set constant at all times, the duration time of the electrode heating operation can be set to a suitable length for each discharge lamp.

According to a second aspect of the present invention, in the first aspect of the present invention, the power converting part includes a step-down chopper circuit for lowering inputted DC power and a full bridge circuit for alternating the DC power outputted from the step-down chopper circuit.

According to a third aspect of the present invention, in the first aspect of the present invention, the power converting part includes a full bridge circuit and the control part controls output power of the power converting part at a duty ratio of on/off of a switching element constituting the full bridge circuit.

According to a fourth aspect of the present invention, in the first aspect of the present invention, the power converting part includes a half bridge circuit and the control part controls the output power of the power converting part at a duty ratio of on/off of a switching element forming the half bridge circuit.

According to a fifth aspect of the present invention, in any of the first to fourth aspects of the present invention, the symmetry determining part determines whether or not the output power is in the positive-negative symmetrical state at all times at least in the electrode heating operation.

According to a sixth aspect of the present invention, in any of the first to fourth aspects of the present invention, the symmetry determining part does not determine whether or not the output power is in the positive-negative symmetrical state until a predetermined mask time has passed since start of an electrode heating operation and determines whether or not the output power is in the positive-negative symmetrical state at all times at least until the electrode heating operation is finished after a lapse of the mask time.

According to this aspect of the present invention, since the output of the symmetry determining part is not reflected on the operation of the control part until the mask time has passed, even if the lamp current is temporarily put into the symmetrical state in the state where discharge in the discharge lamp is unstable immediately after start of the electrode heating operation, the control part does not shift the electrode heating operation to the steady operation.

According to a seventh aspect of the present invention, in any of the first to fourth aspects of the present invention, the symmetry determining part does not determine whether or not the output power is in the positive-negative symmetrical state until a predetermined mask time has passed after the start of the electrode heating operation and determines whether or not the output power is in the positive-negative symmetrical state periodically at least until the electrode heating operation is finished after a lapse of the mask time.

According to this aspect of the present invention, since the output of the symmetry determining part is not reflected on the operation of the control part until the mask time has passed, even if the lamp current is temporarily put into the symmetrical state in the state where discharge in the discharge lamp is unstable immediately after start of the electrode heating operation, the control part does not shift the electrode heating operation to the steady operation.

According to an eighth aspect of the present invention, in any of the first to seventh aspects of the present invention, the duration time of the electrode heating operation is equal to or shorter than a predetermined upper limit time.

According to a ninth aspect of the present invention, in the eighth aspect of the present invention, when the duration time of the electrode heating operation reaches the upper limit time without determining that the output power is in the positive-negative symmetrical state by the symmetry determining part, the control part stops outputting of AC power from the power converting part.

According to this aspect of the present invention, an excessive electrical stress due to unlimited continuation of the electrode heating operation can be prevented from exerting on the discharge lamp and circuit components.

According to a tenth aspect of the present invention, in the eighth aspect of the present invention, when the duration time of the electrode heating operation reaches the upper limit time without determining that the output power is in the positive-negative symmetrical state by the symmetry determining part, the control part returns the electrode heating operation to the starting operation.

According to this aspect of the present invention, as compared to the ninth aspect of the present invention, startability is improved.

According to an eleventh aspect of the present invention, in the eighth aspect of the present invention, when the duration time of the electrode heating operation reaches the upper limit time without determining that the output power is in the positive-negative symmetrical state by the symmetry determining part, the control part stops outputting of AC power from the a power converting part for a predetermined stop time and then returns the operation to the starting operation.

According to this aspect of the present invention, as compared to the ninth aspect of the present invention, startability is improved and as compared to the tenth aspect of the present invention, a time required to start the discharge lamp after return to the starting operation is reduced.

According to a twelfth aspect of the present invention, in the tenth or eleventh aspect of the present invention, the control part counts the number of times of returning from the electrode heating operation to the starting operation and, when the number of times reaches a predetermined upper limit number of times, stops outputting of AC power from the power converting part.

According to this aspect of the present invention, an excessive electrical stress due to unlimited repetition of the starting operation and the electrode heating operation can be prevented from exerting on the discharge lamp and circuit components.

A thirteenth aspect of the present invention includes the discharge lamp lighting device according to any one of the first to twelfth aspects of the present invention and a fixture main body for holding the discharge lamp lighting device.

### [Effect of the Invention]

According to the first aspect of the present invention, since the discharge lamp lighting device further includes a symmetry determining part for determining whether or not output power outputted to the discharge lamp is in the positive-negative symmetrical state, and when the symmetry determining part determines that the output power is in the positive-negative symmetrical state in the electrode heating operation, the control part shifts the electrode heating operation to the steady operation, as compared to the case where the duration time of the electrode heating operation is set constant at all times, the duration time of the electrode heating operation can be set to a suitable length for each discharge lamp.

According to the sixth and seventh aspects of the present invention, respectively, since the output of the symmetry determining part is not reflected on the operation of the control part until the mask time has passed, even if the lamp current is temporarily put into the symmetrical state in the state where discharge in the discharge lamp is unstable immediately after the start of the electrode heating operation, the control part does not shift the electrode heating operation to the steady operation.

According to the ninth aspect of the present invention, since the control part stops outputting of AC power from the power converting part when the duration time of the electrode heating operation reaches the upper limit time without determining that the output power is in the positive-negative symmetrical state by the symmetry determining part, an excessive electrical stress due to unlimited continuation of the electrode heating operation can be prevented from exerting on the discharge lamp and circuit components.

According to the tenth aspect of the present invention, since the control part returns the electrode heating operation to the starting operation when the duration time of the electrode heating operation reaches the upper limit time without determining that the output power is in the positive-negative symmetrical state by the symmetry determining part, as compared to the ninth aspect of the present invention, startability is improved.

According to the eleventh aspect of the present invention, since the control part stops outputting of AC power from the power converting part for a predetermined stop time and then returns the operation to the starting operation when the duration time of the electrode heating operation reaches the upper limit time without determining that the output power is in the positive-negative symmetrical state by the symmetry determining part, as compared to the ninth aspect of the present invention, startability is improved and as compared to the tenth aspect of the present invention, a time required to start the discharge lamp after return to the starting operation is reduced.

According to a twelfth aspect of the present invention, since the control part counts the number of times of returning from the electrode heating operation to the starting operation, and when the number of times reaches a predetermined upper limit number of times, stops outputting of AC power from the power converting part, an excessive electrical stress due to unlimited repetition of the starting operation and the electrode heating operation can be prevented from exerting on the discharge lamp and circuit components.

### [Best Mode for Carrying Out the Invention]

Hereinafter, a best mode for carrying out the present invention will be described referring to figures.

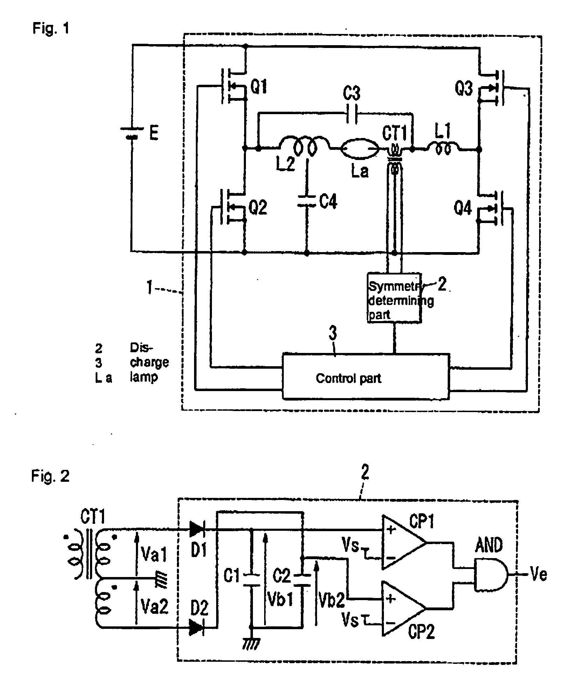

A discharge lamp lighting device 1 in the present embodiment, as shown in Fig. 1, serves to light a hot-cathode discharge lamp La such as a high-pressure discharge lamp also referred to as an HID (High-intensity discharge lamp) and includes a full bridge circuit including four switching elements Q1 to Q4 as a power converting part for converting DC power inputted from a DC power source E into AC power. In the present embodiment, a field effect transistor (FET) is used as the switching elements Q1 to Q4. One output terminal of the full bridge circuit, that is, a connection point between the switching elements Q3, Q4 forming one of two series circuits which include two of the switching elements Q1 to Q4 and are connected between output terminals of the DC power source E in parallel with each other is connected to one end (that is, one electrode) of the discharge lamp La through a series circuit including a first inductor L1 and a primary winding of a current transformer CT1. The other output terminal of the full bridge circuit, that is, a connection point between the switching elements Q1, Q2 forming the other series circuit is connected to the other end (that is, the other electrode) of the discharge lamp La through a second inductor L2. A first capacitor C3 is connected between the connection point of the switching elements Q1, Q2 forming the other series circuit and a connection point of the primary winding of the current transformer CT1 and the first inductor L1. The second inductor L2 is a so-called auto transformer provided with a tap and the tap is connected to the ground through a capacitor C4. In other words, the first inductor L1, the first capacitor C3, the second inductor L2 and the second capacitor C4 along with the discharge lamp La constitute a resonance circuit connected between output terminals of the power converting part (hereinafter referred to as "load circuit").

The embodiment further includes a symmetry determining part 2 connected to a secondary winding of the current transformer CT1 for determining whether or not a current I1a outputted to the discharge lamp La (hereinafter referred to as "lamp current") is in a positive-negative symmetrical state and a control part 3 for on/off-driving each of the switching elements Q1 to Q4.

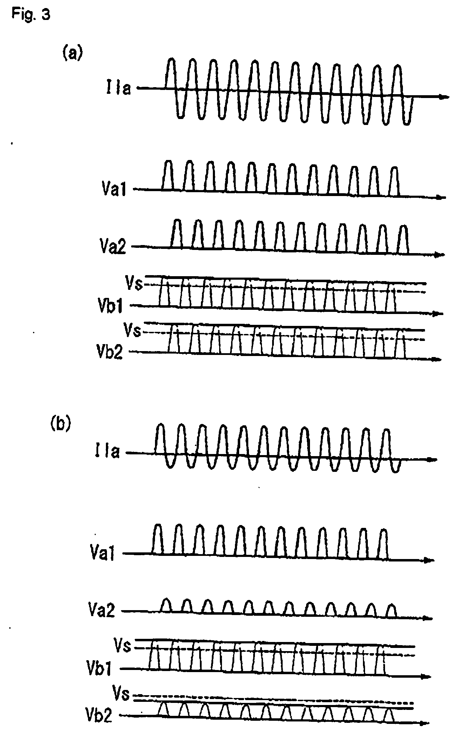

The symmetry determining part 2, as shown in Fig. 2, includes two comparators CP1, CP2 each having a non-inverting input terminal connected to one end of the secondary winding of the current transformer CT1 through diodes D1, D2 and an inverting input terminal receiving a predetermined symmetry determining voltage Vs, and an AND circuit for outputting AND of outputs of the two comparators CP1, CP2 to the control part 3. A tap is provided in the center of the secondary winding of the current transformer CT1 and connected to the ground. Connection points between the non-inverting input terminals of each of the comparators CP1, CP2 and the diodes D1, D2 are connected to the ground through capacitors C1, C2, respectively. In other words, charging voltages Vb1, Vb2 of each of the capacitors C 1, C2 are voltages corresponding to a peak value of output voltages Va1, Va2 of the diodes D1, D2, respectively, that is, a peak value of the lamp current I1a having a direction (polarity) corresponding to each of the capacitors C1, C2, and the charging voltages Vb1, Vb2 are inputted to the non-inverting input terminals of each of the comparators CP1, CP2 corresponding to the capacitors C1, C2, respectively. As shown in Fig. 3 (a), in the case where the lamp current I1a is in a symmetrical state, both the charging voltages Vb1, Vb2 of the capacitors C1, C2 exceed the symmetry determining voltage Vs and thus, an output of the AND circuit (that is, an output of the symmetry determining part 2, hereinafter referred to as "determining output") Ve becomes an H level. On the other hand, in the case where the lamp current is in an asymmetrical state as shown in Fig. 3 (b), the charging voltage Vb2 of the capacitor C2, which is one of the capacitors, falls below the symmetry determining voltage Vs and thus, the determining output Ve becomes an L level. In other words, the fact that the determining output Ve is at the H level means that the symmetry determining part 2 determines that the power outputted to the discharge lamp La is in a symmetrical state, while the fact that the determining output Ve is at the L level means that the symmetry determining part 2 determines that the power outputted to the discharge lamp La is in an asymmetrical state.

The control part 3 on/off-drives the switching elements Q1 to Q4 so that the diagonally located switching elements Q1 to Q4 are simultaneously turned on and the serially-connected switching elements Q1 to Q4 are alternately turned on/off. Accordingly, DC power inputted from the DC power source E is converted into AC power and a frequency of the AC power becomes a frequency of polarity inversion caused by the on/off-driving (hereinafter referred to as "operating frequency").

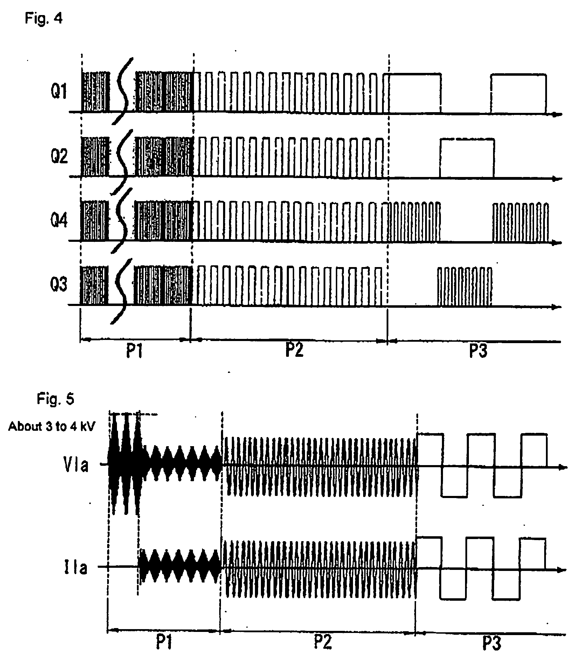

Operations of the control part 3 will be described in more detail below with reference to Figs. 4 to 6. Here, Fig. 4 shows a driving signal inputted to each of the switching elements Q1 to Q4, more specifically, a voltage applied between a gate and a source. Each of the switching elements Q1 to Q4 are turned on in a period during which the driving signal is at the H level and turned off in a period during which the driving signal is at the L level, respectively.

When power is on (S1), the control part 3 starts a starting operation for starting discharge in the discharge lamp La (S2). In a starting period P1 during which the starting operation is performed, the control part 3 periodically varies the operating frequency in a range of a few dozens of kHz using the operating frequency of a few hundreds kHz. In the starting period P1, the operating frequency becomes a resonance frequency (or a fraction of integer) of a resonance circuit including a primary winding portion of the second inductor L2 as an auto transformer, that is, a site between the connection point of the switching elements Q1, Q2 and the tap and the second capacitor C4, and a resonance voltage generated at this time is raised by the second inductor L2 as the auto transformer, resulting in that a voltage outputted to the discharge lamp La (hereinafter referred to as "lamp voltage") V1a reaches a voltage necessary for starting, that is, discharge (for example, 3 to 4kV) and the discharge lamp La is started. In other words, the second inductor L2 and the second capacitor C4 constitute a starting part in claims. In an example shown in Fig. 5, in a third cycle of the periodical variation in the operating frequency, the discharge lamp La is started, the lamp current I1a begins to flow, and an amplitude of the lamp voltage V1a is lowered due to variation in impedance which is caused by starting of the discharge lamp La.

After the above-mentioned starting operation has continued for a predetermined time period, the control part 3 finishes the starting operation. The starting period proceeds to an electrode heating period P2 during which an electrode heating operation of making the operating frequency smaller (for example, a few dozens of kHz) than the operating frequency in the starting operation (S3). The operating frequency in the electrode heating operation is a relatively high frequency which is closer to a resonance frequency of a load circuit connected between the output terminals of the full bridge circuit than the operating frequency in a steady operation described later to heat each electrode of the discharge lamp La. After starting the electrode heating operation, the control part 3 does not reflect an output of the symmetry determining part 2 on its operation until a predetermined mask time has passed (S4). In the electrode heating operation, after the mask time has passed, the control part 3 monitors the output of the symmetry determining part 2 (S6), and when the symmetry determining part 2 determines that the lamp current I1a is in a symmetrical state (that is, the determining output Ve becomes H level, YES at S6), finishes the electrode heating operation and shifts the electrode heating operation to the steady operation (S7). The mask time is set so that discharge in the discharge lamp La becomes stabilized to a certain extent. In the present embodiment, since the output of the symmetry determining part 2 is not reflected on the operation of the control part 3 until the mask time has passed as described above, even if the lamp current I1a is temporarily put into the symmetrical state with discharge in the discharge lamp La becoming unstable immediately after starting of the electrode heating operation, the control part 3 does not shift the electrode heating operation to the steady operation. Monitoring of the output of the symmetry determining part 2 by the control part 3 may be performed at all times, that is, continuously, or may be performed periodically, that is, intermittently.

In a steady period P3 during which the steady operation is performed, the control part 3 makes the operating frequency in the steady operation smaller than the operating frequency in the electrode heating operation (for example, a few hundreds of kHz), thereby feeding rectangular wave AC power for maintaining lighting of the discharge lamp La to the discharge lamp La. In the steady operation, the control part 3 also performs a PWM control of adjusting power fed to the discharge lamp La by turning on/off the switching elements Q3, Q4 of one series circuit at a predetermined duty ratio without turning on at all times in the period during which the diagonally-located switching elements Q1, Q2 are turned on. Furthermore, in the steady operation, the control part 3 detects fade-out of the discharge lamp La based on, for example, the lamp current I1a (S8) and finishes the steady operation when fade-out is detected and returns to the starting operation at Step S2.

The control part 3 also counts a duration time of the electrode heating operation. In the case where the duration time of the electrode heating operation reaches a predetermined upper limit time without determining that the lamp current is in a symmetrical state by the symmetry determining part 2 (that is, the determining voltage Ve is still at the L level) (YES at S5), the control part 3 stops feeding power to the discharge lamp La, for example, by turning off each of the switching elements Q1 to Q4 (S9).

With the above-mentioned configuration, by setting timing of finishing the electrode heating operation to timing when the symmetry determining part 2 determines that the lamp current I1a is in the symmetrical state, the duration time of the electrode heating operation can be set to have a proper length so that fade-out after a shift to the steady operation is less likely to occur and the length is not excessive.

Furthermore, since the electrode heating operation does not continue for the upper limit time or more, an electrical stress exerted on the discharge lamp La and circuit components can be reduced as compared to the case where the electrode heating operation unlimitedly continues.

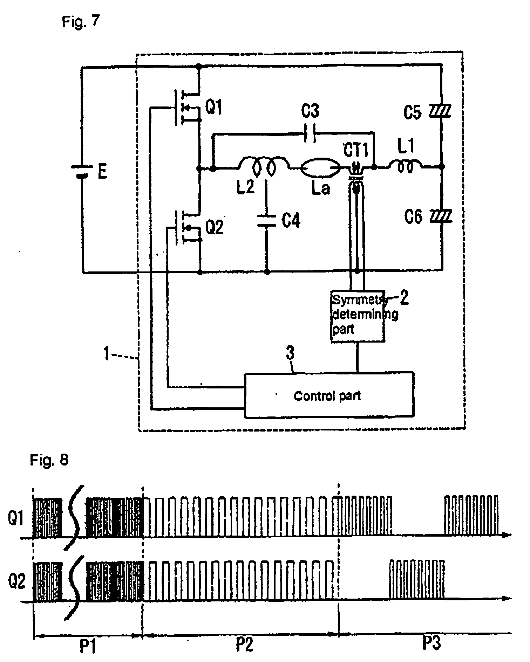

A circuit configuration is not limited to the above-mentioned configuration and, as shown in Fig. 7, a half bridge circuit obtained by replacing each of the switching elements Q3, Q4 forming one series circuit with capacitors C5, C6, respectively, may be adopted in place of the full bridge circuit as shown in Fig. 1. In this case, as shown in Fig. 8, on/off-driving of the two switching elements Q1, Q2 serially-connected with each other is performed in the starting period P1 and the electrode heating period P2 as in the example shown in Fig. 1. However, in the steady period P3, a PWM control of adjusting power outputted to the discharge lamp La at the duty ratio of on/off of the switching elements Q1, Q2 to be turned on in the polarity non-inverting period is performed.

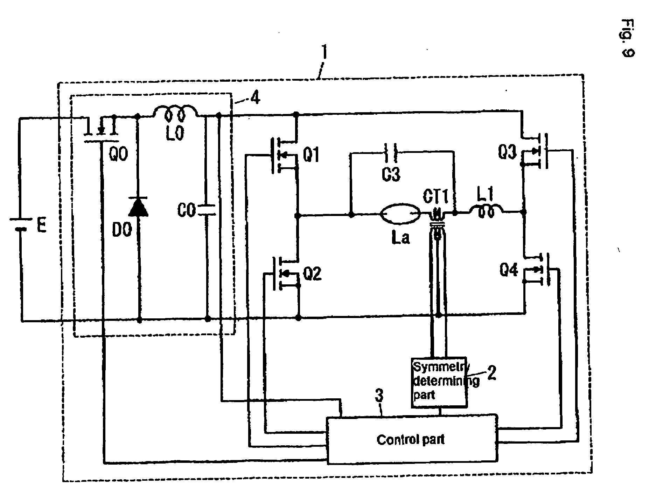

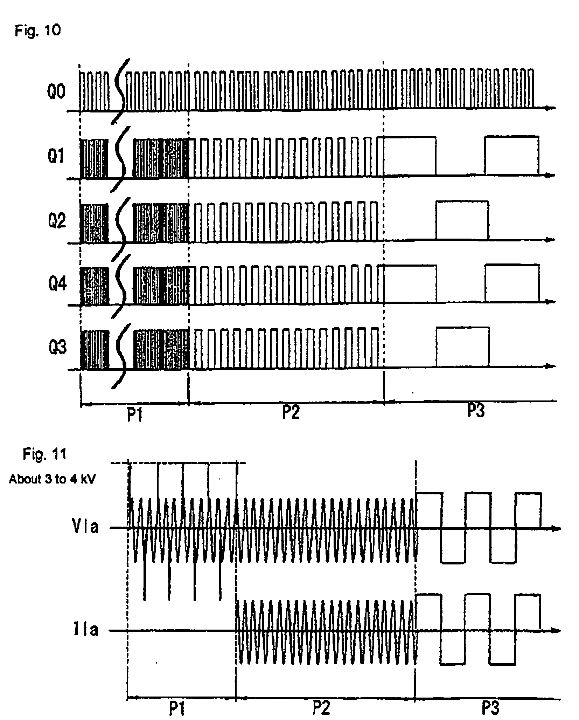

Alternatively, as shown in Fig. 9, a step-down chopper circuit 4 for lowering the output voltage of the DC power source E and outputting the voltage to the full bridge circuit may be provided. In this case, the power converting circuit in claims is constituted of the full bridge circuit including the four switching elements Q1 to Q4 and the step-down chopper circuit 4. In an example shown in Fig. 9, the step-down chopper circuit 4 includes a switching element Q0 having one end connected to a high voltage-side output terminal of the DC power source E and the other end connected to the input terminal of the full bridge circuit through an inductor L0, a diode D0 having a cathode connected to a connection point of the switching element Q0 and the inductor L0 and an anode connected to the ground, and a capacitor C0 connected between the input terminals of the full bridge circuit, that is, the output terminals of the step-down chopper circuit 4. In an example shown in Fig. 9, the second inductor L2 and the second capacitor C4 are omitted from the load circuit and, in the starting operation, a high starting voltage is outputted to the discharge lamp La due to resonance of the resonance circuit including the first capacitor C3 and the first inductor L1. In other words, the first capacitor C3 and the first inductor L1 form the starting part in claims. Furthermore, as shown in Fig. 10, since the control part 3 controls power fed to the discharge lamp La at the duty ratio of on/off of the switching element Q0 of the step-down chopper circuit 4, the PWM control by turning on/off the switching elements Q1 to Q4 of the full bridge circuit is not performed even in the steady period P3.

Alternatively, as shown in Fig. 11, a pulse generating circuit (not shown) as a starting part for generating a high voltage pulse to start the discharge lamp La in the starting operation may be provided. In this case, the operating frequency in the starting operation can be the same as the operating frequency in the electrode heating operation. Since the above-mentioned pulse generating circuit can be achieved according to the known technique, illustration and detailed description thereof are omitted.

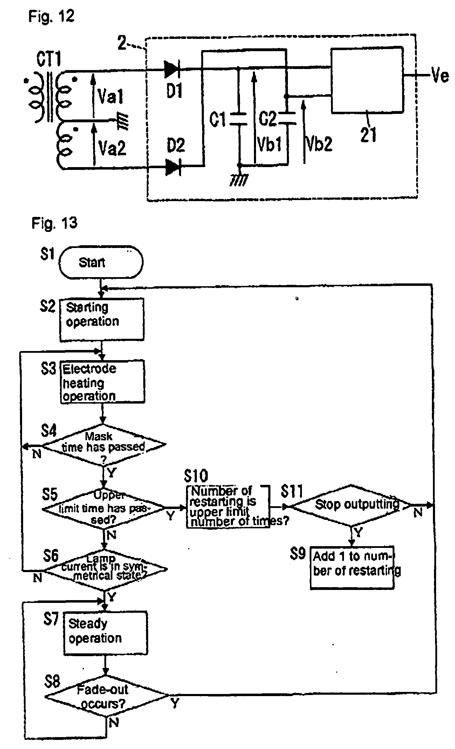

The symmetry determining part 2 is not limited to one as shown in Fig. 2 and may be one as shown in Fig. 12, for example. The symmetry determining part 2 in Fig. 12 includes a calculating part 21 for calculating an absolute value |Vb1 - Vb2| of a difference between inputted charging voltages Vb1, Vb2 of the capacitors C1, C2 and comparing the absolute value with a predetermined determining threshold, in place of the comparators CP1, CP2. When the absolute value |Vb1 - Vb2| is less than the determining threshold, the calculating part 21 determines that the lamp current I1a is in a symmetrical state and sets the output to the control part 3 (determining output) Ve to the H level, and when the absolute value |Vb1 - Vb2| is equal to or greater than the determining threshold, the calculating part 21 determines that the lamp current I1a is in the asymmetrical state and sets the determining output Ve to the L level.

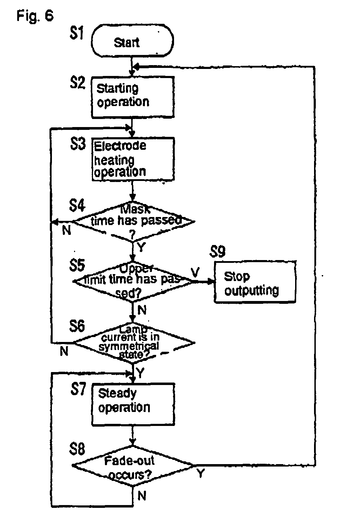

When the duration time of the electrode heating operation reaches the upper limit time (YES at Step S5), the electrode heating operation may be returned to the starting operation at Step S2 as shown in Fig. 13 in place of immediately stopping feeding of power to the discharge lamp La as shown in Fig. 6. Adopting this configuration, startability can be improved as compared to the example shown in Fig. 6. Furthermore, in an example shown in Fig. 13, the number of times of returning from Step S5 to Step S2 (hereinafter referred to as "number of restarting") is counted at Step S10 and compared with a predetermined upper limit number of times at Step S11. When the number of restarting reaches the upper limit number of times, the procedure does not return to Step S2 and proceeds to Step S9 where feeding power to the discharge lamp La is stopped. In other words, the operation does not return to the starting operation over the upper limit number of times, thereby capable of preventing that the above-mentioned loop is unlimitedly repeated, exerting unnecessary electrical stress on the circuit components.

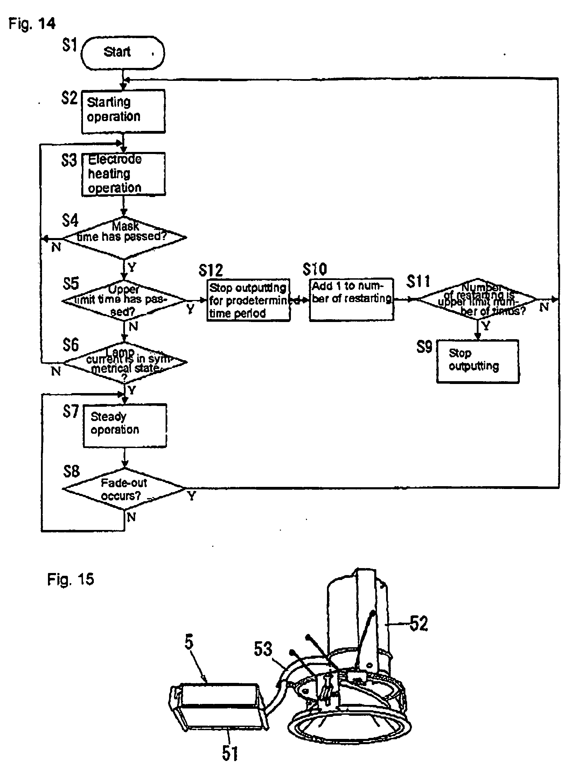

Furthermore, as shown in Fig. 14, before returning from Step S5 to Step S2, the control part 3 may stop feeding power to the discharge lamp La, for example, by turning off each of the switching elements Q1 to Q4 for a predetermined time period (S12). By adopting this configuration, gas in the discharge lamp La becomes stabilized before the starting operation is restarted, and thus, in a next electrode heating operation, the lamp current I1a can be put into a symmetrical state within a relatively short time and the electrode heating operation can shift to the steady operation.

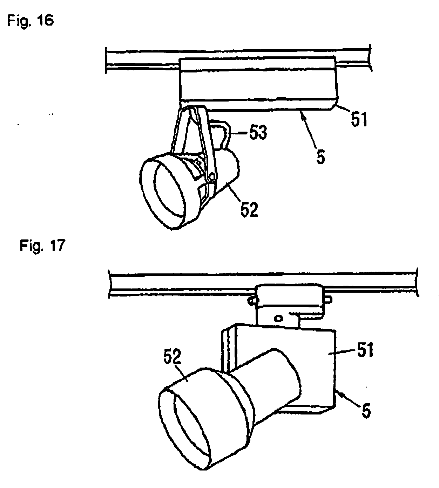

The above-mentioned various discharge lamp lighting devices can be used in, for example, an illumination fixtures 5 as shown in Figs. 15 to 17. The illumination fixtures 5 in Figs. 15 to 17 each include a fixture main body 51 for accommodating the discharge lamp lighting device 1 therein and a lamp body 52 for holding the discharge lamp La. The illumination fixture 5 in Fig. 15 and the illumination fixture 5 in Fig. 16 each have a power feeding line 53 for electrically connecting the discharge lamp lighting device 1 to the discharge lamp La. Since the above-mentioned various illumination fixtures 5 can be realized according to the known technique, detailed description thereof is omitted.

### [Brief Description of the Drawings]

[Fig.1] Fig. 1 is a circuit block diagram showing an embodiment of the present invention.
[Fig.2] Fig. 2 is a circuit diagram showing a symmetry determining part in the embodiment.
[Fig. 3 (a)] Fig. 3 (a) is an illustrative diagram showing an example of an operation of the symmetry determining part in the embodiment in the case where a lamp current is in a symmetrical state.
[Fig. 3 (b)] Fig. 3 (b) is an illustrative diagram showing an example of an operation of the symmetry determining part in the embodiment in the case where a lamp current is in an asymmetrical state.
[Fig. 4] Fig. 4 is an illustrative diagram showing an example of a driving signal inputted from a control part to each switching element in the embodiment.
[Fig. 5] Fig. 5 is an illustrative diagram showing an example of an operation in the embodiment.
[Fig. 6] Fig. 6 is a flow chart showing an example of the operation in the embodiment.
[Fig. 7] Fig. 7 is a circuit block diagram showing a modification example in the embodiment.
[Fig. 8] Fig. 8 is an illustrative diagram showing an example of the driving signal inputted from a control part to each switching element in the modification example in Fig. 7.
[Fig. 9] Fig. 9 is a circuit block diagram showing another modification example in the embodiment.
[Fig. 10] Fig. 10 is an illustrative diagram showing an example of the driving signal inputted from a control part to each switching element in the modification example in Fig. 9.
[Fig. 11] Fig. 11 is an illustrative diagram showing an operation of still another modification example in the embodiment.
[Fig. 12] Fig. 12 is a circuit diagram showing a modification example of a symmetry determining part in the embodiment.
[Fig. 13] Fig. 13 is a flow chart showing a modification example of an operation in the embodiment.
[Fig. 14] Fig. 14 is flow chart showing another modification example of an operation in the embodiment.
[Fig. 15] Fig. 15 is a perspective view showing an example of an illumination fixture using the embodiment.
[Fig. 16] Fig. 16 is a perspective view showing another example of the illumination fixture using the embodiment.
[Fig. 17] Fig. 17 is a perspective view showing still another example of the illumination fixture using the embodiment.
[Figs. 18 (a)] Fig. 18 (a) is an illustrative diagram showing an example of waveform of the lamp current in the case where a duration time of an electrode heating operation lacks.
[Fig. 18 (b)] Fig. 18 (b) is an illustrative diagram showing an example of waveform of the lamp current in the case where the duration time of the electrode heating operation is sufficiently long.

### [Description of Reference Numerals]

- 1: Discharge lamp lighting device
- 2: Symmetry determining part
- 3: Control part
- 4: Step-down chopper circuit
- 5: Illumination fixture
- 51: Fixture main body
- La: Discharge lamp

Fig. 1
- 1: Symmetry determining part
- 2: Control part
- 3: Discharge lamp

Fig. 5 About 3 to 4 kV

Fig. 6
- 1: Start
- 2: Starting operation
- 3: Electrode heating operation
- 4: Mask time has passed?
- 5: Upper limit time has passed?
- 6: Lamp current is in symmetrical state?
- 7: Steady operation
- 8: Fade-out occurs?
- 9: Stop outputting

Fig. 7
- 1: Symmetry determining part
- 2: Control part

Fig. 9
- 1: Symmetry determining part
- 2: Control part

Fig. 11
- 1.: About 3 to 4 kV

Fig. 13
- 1: Start
- 2: Starting operation
- 3: Electrode heating operation
- 4: Mask time has passed?
- 5: Upper limit time has passed?
- 6: Lamp current is in symmetrical state?
- 7: Steady operation
- 8: Fade-out occurs?
- 9: Add 1 to number of restarting
- 10: Number of restarting is upper limit number of times?
- 11: Stop outputting

Fig. 14
- 1: Start
- 2: Starting operation
- 3: Electrode heating operation
- 4: Mask time has passed?
- 5: Upper limit time has passed?
- 6: Lamp current is in symmetrical state?
- 7: Steady operation
- 8: Fade-out occurs?
- 9: Stop outputting for predetermined time period
- 10: Add 1 to number of restarting
- 11: Number of restarting is upper limit number of times?
- 12: Stop outputting

Fig. 18
- 1: Waveform of lamp current

## Claims

1. A discharge lamp lighting device (1) comprising:
a power converting part (Q1-Q4) for receiving an input of DC power and outputting AC power;
a starting part (L2, C4) connected between output terminals of the power converting part (Q1-Q4) together with a discharge lamp (La), the starting part (L2, C4) generating a high voltage for starting the discharge lamp (La); and
a control part (3) for controlling the power converting part, wherein
at the start of the discharge lamp (La), after a starting operation of allowing the discharge lamp (La) to start with a high voltage generated by the starting part (L2, C4) and before start of a steady operation of allowing the power converting part to output AC power for maintaining lighting of the discharge lamp (La) to the discharge lamp (La), the control part (3) performs an electrode heating operation of making an output frequency of the power converting part higher than that in the steady operation to heat each electrode of the discharge lamp (La),
**characterized in that** the discharge lamp lighting device further includes a symmetry determining part (2) for determining whether or not output power outputted to the discharge lamp (La) is in a positive-negative symmetrical state, and
when the symmetry determining part (2) determining that the output power is in a positive-negative symmetrical state in the electrode heating operation (P2), the control part (3) shifts the electrode heating operation (P2) to the steady operation (P3).

2. The discharge lamp lighting device according to claim 1, wherein the power converting part includes a step-down chopper circuit for lowering inputted DC power and a full bridge circuit (Q1-Q4) for alternating the DC power outputted from the step-down chopper circuit.

3. The discharge lamp lighting device according to claim 1, wherein the power converting part includes a full bridge circuit and the control part (2) controls the output power of the power converting part at a duty ratio of on/off of a switching element (Q1, Q2, Q3, Q4) forming the full bridge circuit.

4. The discharge lamp lighting device according to claim 1, wherein the power converting part includes a half bridge circuit and the control part (2) controls the output power of the power converting part at a duty ratio of on/off of a switching element (Q1, Q2) forming the half bridge circuit.

5. The discharge lamp lighting device according to any one of claims 1 to 4, wherein the symmetry determining part (2) determines whether or not the output power is in a positive-negative symmetrical state at all times at least in the electrode heating operation (P2).

6. The discharge lamp lighting device according to any one of claims 1 to 4, wherein the symmetry determining part (2) does not determine whether or not the output power is in a positive-negative symmetrical state until a predetermined mask time has passed since start of the electrode heating operation (P2) and determines whether or not the output power is in the positive-negative symmetrical state at all times at least until the electrode heating operation (P2) is finished after a lapse of the mask time.

7. The discharge lamp lighting device according to any one of claims 1 to 4, wherein the symmetry determining part (2) does not determine whether or not the output power is in a positive-negative symmetrical state until a predetermined mask time has passed after start of the electrode heating operation (P2) and determines whether or not the output power is in the positive-negative symmetrical state periodically at least until the electrode heating operation (P2) is finished after a lapse of the mask time.

8. The discharge lamp lighting device according to any one of claims 1 to 7, wherein a duration time of the electrode heating operation (P2) is equal to or shorter than a predetermined upper limit time.

9. The discharge lamp lighting device according to claim 8, wherein when the duration time of the electrode heating operation (P2) reaching the upper limit time without determining that the output power is in a positive-negative symmetrical state by the symmetry determining part (2), the control part stops outputting of AC power from the power converting part.

10. The discharge lamp lighting device according to claim 8, wherein when the duration time of the electrode heating operation (P2) reaching the upper limit time without determining that the output power is in a positive-negative symmetrical state by the symmetry determining part (2), the control part returns the electrode heating operation (P2) to the starting operation (P1).

11. The discharge lamp lighting device according to claim 8, wherein upon the duration time of the electrode heating operation (P2) reaching the upper limit time without determining that the output power is in a positive-negative symmetrical state by the symmetry determining part, the control part stops outputting of AC power from the power converting part for a predetermined stop time, and then returns the operation to the starting operation (P1).

12. The discharge lamp lighting device according to claim 10 or 11, wherein the control part counts the number of times of returning from the electrode heating operation (P2) to the starting operation (P1), and stops outputting of AC power from the power converting part upon the number of times reaching a predetermined upper limit number of times.

13. An illumination fixture (5) comprising the discharge lamp lighting device (1) according to any one of claims 1 to 12 and a fixture main body (51) for holding the discharge lamp lighting device (1).

## Patentansprüche

1. Entladungslampen-Beleuchtungsvorrichtung (1) aufweisend:
einen Leistungswandlerteil (Q1 - Q4) für das Empfangen einer Gleichspannungseingangsleistung und Ausgeben einer Wechselspannungsleistung;
einen Starterteil (L2, C4), der gemeinsam mit einer Entladungslampe (La) zwischen die Ausgangsanschlüsse des Leistungswandlerteils (Q1 bis Q4) geschaltet ist, wobei der Starterteil (L2, C4) eine hohe Spannung zum Starten der Entladungslampe (La) erzeugt; und
einen Steuerteil (3) zum Steuern des Leistungswandlerteils, wobei beim Start der Entladungslampe (La) nach einem Startbetrieb, der der Entladungslampe (La) ermöglicht, mit einer durch den Starterteil (L2, C4) erzeugten hohen Spannung zu starten und vor dem Beginn eines Dauerbetriebs, bei dem es dem Leistungswandlerteil ermöglicht wird, die Wechselspannungsleistung zur Aufrechterhaltung des Leuchtens der Entladungslampe (La) an die Entladungslampe (La) abzugeben, der Steuerteil (3) einen Elektrodenheizbetrieb ausführt, bei dem eine Ausgangsfrequenz des Leistungswandlerteils größer gemacht wird als in dem Dauerbetrieb, um jede Elektrode der Entladungslampe (La) zu heizen,
**dadurch gekennzeichnet, dass** die Entladungslampen-Beleuchtungsvorrichtung außerdem einen Symmetrieermittlungsteil (2) zur Ermittlung aufweist, ob oder ob nicht die Ausgangsleistung, die an die Entladungslampe (La) abgegeben wird, in einem positiv-negativ symmetrischen Zustand ist, und
wenn der Symmetrieermittlungsteil (2) ermittelt, dass die Ausgangsleistung in einem positiv-negativ symmetrischen Zustand in dem Elektrodenheizbetrieb (P2) ist, dann wechselt der Steuerteil (3) den Elektrodenheizbetrieb (P2) zum Dauerbetrieb (P2) zum Dauerbetrieb (P3).

2. Entladungslampen-Beleuchtungsvorrichtung nach Anspruch 1, bei dem der Leistungswandlerteil einen Abwärtswandlerschaltkreis zum Absenken einer eingebrachten Gleichspannungsleistung und einen Vollbrückenkreis (Q1 - Q4) zum Wechselrichten der Gleichspannungsleistung aufweist, die von dem Abwärtswandlerschaltkreis ausgegeben wird.

3. Entladungslampen-Beleuchtungsvorrichtung nach Anspruch 1, bei dem der Leistungswandlerteil einen Vollbrückenkreis enthält und der Steuerteil (2) die Ausgangsleistung des Leistungswandlerteils bei einer relativen Einschaltdauer durch Einschalten/Ausschalten eines Schaltelements (Q1, Q2, Q3, Q4) steuert, das den Vollbrückenkreis bildet.

4. Entladungslampen-Beleuchtungsvorrichtung nach Anspruch 1, bei dem der Leistungswandlerteil einen Halbbrückenkreis enthält und der Steuerteil (2) die Ausgangsleistung des Leistungswandlerteils bei einer relativen Einschaltdauer durch Einschalten/Ausschalten eines Schaltelements (Q1, Q2) steuert, das den Halbbrückenkreis bildet.

5. Entladungslampen-Beleuchtungsvorrichtung nach irgendeinem der Ansprüche 1 bis 4, bei dem der Symmetrieermittlungsteil (2) ermittelt, ob oder ob nicht die Ausgangsleistung in einem positiv-negativ symmetrischen Zustand zu jedem Zeitpunkt zumindest in dem Elektrodenheizbetrieb (P2) ist.

6. Entladungslampen-Beleuchtungsvorrichtung nach irgendeinem der Ansprüche 1 bis 4, bei dem der Symmetrieermittlungsteil (2) nicht ermittelt, ob oder ob nicht die Ausgangsleistung in einem positiv-negativ symmetrischen Zustand ist, bis eine vorgegebene Maskierungszeit seit dem Start des Elektrodenheizbetriebs (P2) abgelaufen ist und nach dem Ablauf der Maskierungszeit ermittelt, ob oder ob nicht die Ausgangsleistung in dem positiv-negativ symmetrischen Zustand zu jedem Zeitpunkt zumindest bis zum Ende des Elektrodenheizbetriebs (P2) ist.

7. Entladungslampen-Beleuchtungsvorrichtung nach irgendeinem der Ansprüche 1 bis 4, bei dem der Symmetrieermittlungsteil (2) nicht ermittelt, ob oder ob nicht die Ausgangsleistung in einem positiv-negativ symmetrischen Zustand ist, bis eine vorherbestimmte Maskierungszeit nach dem Start des Elektrodenheizbetriebs (P2) abgelaufen ist und periodisch ermittelt, ob oder ob nicht die Ausgangsleistung in dem positiv-negativ symmetrischen Zustand ist zumindest bis der Elektrodenheizbetrieb (P2) nach einem Ablauf der Maskierungszeit beendet ist.

8. Entladungslampen-Beleuchtungsvorrichtung nach irgendeinem der Ansprüche 1 bis 7, bei dem die Zeitdauer des Elektrodenheizbetriebs (P2) gleich ist oder kürzer als ein vorhergegebenes oberes Zeitlimit.

9. Entladungslampen-Beleuchtungsvorrichtung nach Anspruch 8, bei dem, wenn die Zeitdauer des Elektrodenheizbetriebs (P2) das obere Zeitlimit erreicht ohne Ermittlung durch den Symmetrieermittlungsteil (2), dass die Ausgangsleistung in einem positiv-negativ symmetrischen Zustand ist, der Steuerteil das Abgeben der Wechselspannungsleistung von dem Leistungswandlerteil stoppt.

10. Entladungslampen-Beleuchtungsvorrichtung nach Anspruch 8, bei dem, wenn die Zeitdauer des Elektrodenheizbetriebs (P2) das obere Zeitlimit erreicht ohne Ermittlung durch den Symmetrieermittlungsteil (2), dass die Ausgangsleistung in einem positiv-negativ symmetrischen Zustand ist, der Steuerteil von dem Elektrodenheizbetrieb (P2) zum Startbetrieb (P1) zurückkehrt.

11. Entladungslampen-Beleuchtungsvorrichtung nach Anspruch 8, bei dem, sobald die Zeitdauer des Elektrodenheizbetriebs (P2) das obere Zeitlimit erreicht ohne Ermittlung durch den Symmetrieermittlungsteil, dass die Ausgangsleistung in einem positiv-negativ symmetrischen Zustand ist, der Steuerteil das Abgeben einer Wechselspannungsleistung von dem Leistungswandlerteil für eine vorhergegebene Anhaltezeit stoppt und dann von dem Betrieb zum Startbetrieb (P1) zurückkehrt.

12. Entladungslampen-Beleuchtungsvorrichtung nach Anspruch 10 oder 11, bei der Steuerteil die Anzahl der Fälle des Zurückkehrens von dem Elektrodenheizbetrieb (P2) zu dem Startbetrieb (P1) zählt und das Abgeben einer Wechselspannungsleistung von dem Leistungswandlerteil stoppt, nachdem die Anzahl von Fällen eine vorherbestimmte obere Grenzanzahl von Fällen erreicht.

13. Beleuchtungshalterung (5) aufweisend die Entladungslampen-Beleuchtungsvorrichtung (1) nach einem der Ansprüche 1 bis 12, und einen Halterungshauptkörper (51) zum Halten der Entladungslampen-Beleuchtungsvorrichtung (1).

## Revendications

1. Dispositif d'éclairage à lampe à décharge (1) comprenant :
une partie de conversion d'énergie (Q1-Q4) destinée à recevoir une entrée d'énergie à courant continu et à délivrer en sortie une énergie à courant alternatif ;
une partie de démarrage (L2, C4) connectée entre des bornes de sortie de la partie de conversion d'énergie (Q1-Q4) et avec une lampe à décharge (La), la partie de démarrage (L2, C4) produisant une haute tension pour démarrer la lampe à décharge (La) ; et
une partie de commande (3) pour commander la partie de conversion d'énergie, dans laquelle, au démarrage de la lampe à décharge (La), après une opération de démarrage qui consiste à laisser la lampe à décharge (La) démarrer avec une haute tension produite par la partie de démarrage (L2, C4) et avant le début d'un fonctionnement en régime établi qui consiste à laisser la partie de conversion d'énergie délivrer une énergie à courant alternatif pour maintenir l'éclairage de la lampe à décharge (La) à la lampe à décharge (La), la partie de commande (3) commande un fonctionnement de chauffage d'électrode qui consiste à rendre une fréquence de sortie de la partie de conversion d'énergie supérieure à celle du fonctionnement en régime établi pour chauffer chaque électrode de la lampe à décharge (La),
**caractérisé en ce que** le dispositif d'éclairage à lampe à décharge comprend en outre une partie de détermination de symétrie (2) pour déterminer si l'énergie de sortie délivrée à la lampe à décharge (La) est ou non dans un état symétrique positif-négatif, et
quand la partie de détermination de symétrie (2) détermine que l'énergie de sortie est dans un état symétrique positif-négatif dans le fonctionnement de chauffage d'électrode (P2), la partie de commande (3) fait passer du fonctionnement de chauffage d'électrode (P2) au fonctionnement en régime établi (P3).

2. Dispositif d'éclairage à lampe à décharge selon la revendication 1, dans lequel la partie de conversion d'énergie comprend un circuit hacheur abaisseur pour abaisser l'énergie à courant continu appliquée en entrée et un montage en pont complet (Q1-Q4) pour faire alterner l'énergie en courant continu délivrée par le circuit hacheur abaisseur.

3. Dispositif d'éclairage à lampe à décharge selon la revendication 1, dans lequel la partie de conversion d'énergie comprend un montage en pont complet et la partie de commande (2) commande la puissance de sortie de la partie de conversion d'énergie à un rapport de marche de marche/arrêt d'un élément de commutation (Q1, Q2, Q3, Q4) formant le montage en pont complet.

4. Dispositif d'éclairage à lampe à décharge selon la revendication 1, dans lequel la partie de conversion d'énergie comprend un montage en demi pont et la partie de commande (2) commande la puissance de sortie de la partie de conversion d'énergie à un rapport de marche de marche/arrêt d'un élément de commutation (Q1, Q2) formant le montage en demi pont.

5. Dispositif d'éclairage à lampe à décharge selon l'une quelconque des revendications 1 à 4, dans lequel la partie de détermination de symétrie (2) détermine si la puissance de sortie est ou non dans un état symétrique positif-négatif à tout moment, au moins dans le fonctionnement de chauffage d'électrode (P2).

6. Dispositif d'éclairage à lampe à décharge selon l'une quelconque des revendications 1 à 4, dans lequel la partie de détermination de symétrie (2) ne détermine pas si la puissance de sortie est ou non dans un état symétrique positif-négatif jusqu'à ce qu'un temps de masquage prédéterminé se soit écoulé depuis le début du fonctionnement de chauffage d'électrode (P2) et détermine si la puissance de sortie est ou non dans l'état symétrique positif-négatif à tout moment au moins jusqu'à ce que le fonctionnement de chauffage d'électrode (P2) soit fini après l'écoulement d'un temps de masquage.

7. Dispositif d'éclairage à lampe à décharge selon l'une quelconque des revendications 1 à 4, dans lequel la partie de détermination de symétrie (2) ne détermine pas si la puissance de sortie est ou non dans un état symétrique positif-négatif jusqu'à ce qu'un temps de masquage prédéterminé se soit écoulé après le début du fonctionnement de chauffage d'électrode (P2) et détermine si la puissance de sortie est ou non dans l'état symétrique positif-négatif périodiquement au moins jusqu'à ce que le fonctionnement de chauffage d'électrode (P2) soit fini après l'écoulement d'un temps de masquage.

8. Dispositif d'éclairage à lampe à décharge selon l'une quelconque des revendications 1 à 7, dans lequel une durée du fonctionnement de chauffage d'électrode (P2) est inférieure ou égale à un temps limite supérieur prédéterminé.

9. Dispositif d'éclairage à lampe à décharge selon la revendication 8, dans lequel, quand la durée du fonctionnement de chauffage d'électrode (P2) atteint le temps limite supérieur sans qu'il soit déterminé par la partie de détermination de symétrie (2) que la puissance de sortie est dans un état symétrique positif-négatif, la partie de commande arrête la fourniture d'une énergie à courant alternatif par la partie de conversion d'énergie.

10. Dispositif d'éclairage à lampe à décharge selon la revendication 8, dans lequel, quand la durée du fonctionnement de chauffage d'électrode (P2) atteint le temps limite supérieur sans qu'il soit déterminé par la partie de détermination de symétrie (2) que la puissance de sortie est dans un état symétrique positif-négatif, la partie de commande fait revenir le fonctionnement de chauffage d'électrode (P2) à l'opération de démarrage (P1).

11. Dispositif d'éclairage à lampe à décharge selon la revendication 8, dans lequel, lorsque la durée du fonctionnement de chauffage d'électrode (P2) atteint le temps limite supérieur sans qu'il soit déterminé par la partie de détermination de symétrie que la puissance de sortie est dans un état symétrique positif-négatif, la partie de commande arrête la fourniture d'une énergie à courant alternatif par la partie de conversion d'énergie pendant un temps d'arrêt prédéterminé, puis fait revenir le fonctionnement à l'opération de démarrage (P1).

12. Dispositif d'éclairage à lampe à décharge selon la revendication 10 ou 11, dans lequel la partie de commande compte le nombre de fois où l'on revient du fonctionnement de chauffage d'électrode (P2) à l'opération de démarrage (P1), et arrête la fourniture d'une énergie à courant alternatif par la partie de conversion d'énergie lorsque le nombre de fois atteint un nombre de fois limite supérieur prédéterminé.

13. Appareil d'éclairage (5) comprenant le dispositif d'éclairage à lampe à décharge (1) selon l'une quelconque des revendications 1 à 12 et un corps principal d'appareil (51) pour supporter le dispositif d'éclairage à lampe à décharge (1).
